# FASCICULE DE BREVET EUROPEEN

(11) **EP 1 773 661 B1**
(45) Date de publication et mention de la délivrance du brevet: **15.04.2009**
(21) Numéro de dépôt: 05856228.1
(22) Date de dépôt: 03.08.2005
(51) Int. Cl.: B64D 27/26

(54) **ENSEMBLE MOTEUR POUR AERONEF**
FLUGZEUGMOTORANORDNUNG
AIRCRAFT ENGINE ASSEMBLY

(30) Priorité: 05.08.2004 FR 0451790
(43) Date de publication de la demande: 18.04.2007
(73) Titulaire: AIRBUS France, 31060 Toulouse Cédex (FR)
(72) Inventeur: DIOCHON, Lionel, F-31000 Toulouse (FR); DURAND, Jérôme, F-31490 Leguevin (FR)
(74) Mandataire: Poulin, Gérard
(86) Numéro de dépôt international: PCT/FR2005/050644
(87) Numéro de publication internationale: WO 2006/090031

(56) Documents cités:
- FR-A- 2 732 947
- US-A- 3 848 832
- US-A- 3 952 973
- US-A- 3 979 087
- US-A- 4 266 741

## Description

### DOMAINE TECHNIQUE

La présente invention se rapporte de façon générale à un ensemble moteur pour aéronef, du type comprenant un turboréacteur, un mât d'accrochage, ainsi qu'une pluralité d'attaches moteur interposées entre ce mât d'accrochage et le turboréacteur. Le domaine technique concerné est illustré par les documents US-A-3,979,087 et FR-A-2 732 947.

### ÉTAT DE LA TECHNIQUE ANTÉRIEURE

De façon connue, le mât d'accrochage d'un tel ensemble moteur est prévu pour constituer l'interface de liaison entre un moteur, du type turboréacteur, et une voilure de l'aéronef équipée de cet ensemble. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le mât comporte une structure rigide, par exemple du type « caisson », c'est-à-dire formée par l'assemblage de longerons et de panneaux latéraux raccordés entre eux par l'intermédiaire de nervures transversales.

Un système de montage est interposé entre le moteur et la structure rigide du mât, ce système comportant globalement une pluralité d'attaches moteur, réparties habituellement en attache(s) avant solidaire(s) du carter de soufflante du moteur et en attache(s) arrière solidaire(s) du carter central de ce même moteur.

De plus, le système de montage comprend un dispositif de reprise des efforts de poussée générés par le moteur. Dans l'art antérieur, ce dispositif prend par exemple la forme de deux bielles latérales raccordées d'une part à une partie arrière du carter de soufflante du moteur, et d'autre part à une attache montée sur la structure rigide du mât, par exemple une attache arrière.

A titre indicatif, il est précisé que le mât d'accrochage est associé à un second système de montage interposé entre ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, malgré la présence du dispositif de reprise des efforts de poussée, ces efforts de poussée générés par le moteur provoquent habituellement une flexion longitudinale plus ou moins importante de ce dernier, à savoir une flexion résultant d'un couple exercé selon une direction transversale de l'aéronef.

Lorsqu'une telle flexion longitudinale survient, notamment durant les phases de croisière de l'aéronef, on rencontre alors des frottements élevés entre les pales tournantes de compresseur et de turbine, et le carter central du moteur.

De plus, il est noté que le phénomène de flexion longitudinale susmentionné, et donc celui de frottement des pales tournantes, est largement accentué par le fait que sur les turboréacteurs actuels, la recherche d'un taux de dilution toujours plus important amène inéluctablement les concepteurs à augmenter le diamètre de la soufflante par rapport à celui du coeur (de l'anglais « core ») du turboréacteur.

La conséquence principale des frottements rencontrés réside dans une usure prématurée du moteur, qui est naturellement néfaste à la durée de vie de celui-ci, ainsi qu'à ses performances.

Par ailleurs, il est à observer que d'autres phénomènes de flexion du moteur, susceptibles de provoquer des frottements entre les pales tournantes de compresseur et de turbine et le carter central du moteur, peuvent survenir suite à des rafales s'exerçant par exemple verticalement ou horizontalement.

### EXPOSÉ DE L'INVENTION

L'invention a donc pour but de proposer un ensemble pour aéronef remédiant au moins partiellement aux inconvénients mentionnés ci-dessus relatifs aux réalisations de l'art antérieur, et également de présenter un aéronef disposant d'au moins un tel ensemble.

Pour ce faire, l'invention a pour objet un ensemble moteur aéronef comprenant un turboréacteur, un mât d'accrochage ainsi qu'une pluralité d'attaches moteur interposées entre le mât d'accrochage et le turboréacteur, chacune des attaches moteur étant fixée à un carter de soufflante du turboréacteur.

En d'autres termes, dans l'ensemble moteur selon l'invention, la reprise des efforts générés par le turboréacteur s'effectue exclusivement sur le carter de soufflante à l'aide de toutes les attaches moteur, et permet par conséquent au carter central de ce turboréacteur de ne plus être relié directement au mât d'accrochage par une ou des attaches arrière, comme cela était le cas dans les réalisations de l'art antérieur.

Ainsi, cette disposition particulière des attaches moteur induit une diminution considérable de la flexion rencontrée au niveau du carter central, que cette flexion soit due aux efforts de poussée générés par le turboréacteur, ou bien due aux rafales susceptibles d'être rencontrées durant les diverses phases de vol de l'aéronef.

Par conséquent, la diminution de flexion susvisée engendre une baisse significative des frottements entre les pales tournantes de compresseur et de turbine et le carter central du moteur, et limite donc grandement les pertes de rendement dues à l'usure de ces pales.

Le fait de prévoir les attaches moteur sur le carter de soufflante offre la possibilité de les écarter fortement les unes des autres. Cet écartement important a pour avantage de pouvoir simplifier considérablement la conception de ces attaches moteur, en raison du fait que les efforts qu'elles doivent reprendre, associés à un moment selon un axe donné, sont naturellement affaiblis par rapport à ceux rencontrés dans les solutions classiques de l'art antérieur dans lesquelles les attaches moteur situées sur le carter central ne pouvaient pas être aussi éloignées les unes des autres.

Enfin, il est indiqué que les attaches moteur et le mât d'accrochage peuvent avantageusement être situés à distance de la partie chaude du turboréacteur, ce qui implique une diminution significative des effets thermiques susceptibles de s'appliquer sur ces éléments.

De préférence, la pluralité d'attaches moteur est constituée d'une première attache moteur et d'une seconde attache moteur situées de façon symétrique par rapport à un plan défini par un axe longitudinal du turboréacteur et une direction verticale de celui-ci, ainsi que d'une troisième attache moteur traversée par ce même plan.

Dans cette configuration, on peut alors prévoir que les première, seconde et troisième attaches moteur sont fixées sur une partie annulaire périphérique du carter de soufflante, ce qui leur permet d'occuper des positions dans lesquelles elles sont avantageusement très éloignées les unes des autres.

Préférentiellement, les première et seconde attaches moteur sont traversées par un plan défini par l'axe longitudinal du turboréacteur et une direction transversale de celui-ci.

Toujours de manière préférentielle, les première et seconde attaches moteur sont chacune conçues de manière à reprendre des efforts s'exerçant selon une direction longitudinale du turboréacteur et selon la direction verticale de celui-ci, et la troisième attache moteur est conçue de manière à reprendre des efforts s'exerçant selon cette même direction longitudinale du turboréacteur et selon une direction transversale de celui-ci.

De façon préférée, le mât d'accrochage de l'ensemble moteur comporte une structure rigide comprenant une pluralité d'arceaux agencés de façon à délimiter conjointement une partie d'une surface fictive sensiblement cylindrique de section circulaire.

Ainsi, chacun des arceaux prévus dispose donc d'une courbure lui permettant de s'étendre autour de cette surface fictive sensiblement cylindrique de section circulaire. Ils forment par conséquent conjointement un ensemble de la structure rigide qui est avantageusement capable de n'être que très peu contraignant en termes de perturbation du flux secondaire s'échappant du canal annulaire de soufflante du turboréacteur, comparativement aux solutions classiques de l'art antérieur dans lesquelles le mât d'accrochage prenait la forme d'un caisson central de grandes dimensions, disposé de façon très rapprochée du carter central du turboréacteur.

Effectivement, il est possible de prévoir qu'un diamètre de la surface fictive est sensiblement identique à un diamètre d'une surface cylindrique externe du carter de soufflante, impliquant que l'ensemble rigide formé par la pluralité d'arceaux se situe alors sensiblement dans le prolongement de cette surface externe du carter de soufflante, et plus généralement dans le prolongement de la partie annulaire périphérique de ce carter. Naturellement, dans ce cas précis où la pluralité d'arceaux est assimilable à une portion d'une enveloppe sensiblement cylindrique de section circulaire et de diamètre proche de celui du carter de soufflante, les perturbations du flux secondaire provoquées par cette pluralité d'arceaux sont extrêmement faibles, voire quasiment inexistantes.

Cela permet alors avantageusement d'obtenir des gains en traînée, en rendement du turboréacteur, ainsi qu'en consommation de carburant.

A titre indicatif, il est noté que si la pluralité d'arceaux est assimilable de façon générale à une portion d'une enveloppe sensiblement cylindrique de section circulaire, elle prend de préférence la forme d'une portion d'une enveloppe sensiblement cylindrique de section semi-circulaire, la notion de « portion » étant bien entendu présente en raison des espaces vides situés entre les différents arceaux. Naturellement, cette forme préférée est tout à fait adaptée pour assurer un montage aisé du turboréacteur sur la structure rigide du mât d'accrochage.

De préférence, la pluralité d'arceaux comporte au moins un arceau en forme de portion annulaire sensiblement centré sur un axe longitudinal de la surface fictive, cet axe longitudinal étant parallèle à la direction longitudinale du turboréacteur, et préférentiellement confondu avec l'axe longitudinal de ce turboréacteur. A titre d'exemple illustratif, c'est sur un tel arceau en forme de portion annulaire que peuvent être fixées la totalité des attaches moteurs susmentionnées.

Par ailleurs, la structure rigide du mât d'accrochage peut comporter un caisson central, également appelé caisson central de torsion, qui s'étend parallèlement à l'axe longitudinal de la surface fictive, et qui est solidaire de chaque arceau en forme de portion annulaire. Bien entendu, la résistance mécanique apportée par les arceaux permet à ce caisson de disposer de dimensions plus faibles que celles pratiquées antérieurement, principalement en ce qui concerne son épaisseur. Cela implique que ce caisson central est également en mesure de ne provoquer que de très faibles perturbations du flux secondaire s'échappant du canal annulaire de soufflante. Par ailleurs, il est aussi à observer que la faible épaisseur du caisson central est autorisée en raison du fait qu'il n'est plus prévu d'interposer une attache moteur arrière entre ce même caisson et le carter central du turboréacteur, et qu'il n'est par conséquent plus nécessaire d'approcher le caisson le plus près possible de ce carter, comme cela était le cas antérieurement.

De préférence, la pluralité d'arceaux comporte en outre deux arceaux latéraux de reprise des efforts de poussée disposés respectivement de part et d'autre du caisson central, chacun des deux arceaux latéraux étant solidarisé d'une part à chaque arceau en forme de portion annulaire, et d'autre part au caisson central.

La reprise des efforts de poussée générés par le turboréacteur peut alors avantageusement s'effectuer avec des éléments faisant partie intégrante de la structure rigide du mât d'accrochage. Ainsi, il n'est donc plus nécessaire de prévoir de dispositif additionnel de reprise des efforts de poussée du type bielles latérales, comme cela était le cas dans les solutions connues de l'art antérieur.

A ce titre, toujours dans le but de reprendre ces efforts de poussée, on peut prévoir que la pluralité d'arceaux comporte en outre deux arceaux latéraux secondaires de reprise des efforts de poussée disposés respectivement de part et d'autre du caisson central, chacun de ces deux arceaux latéraux secondaires étant solidarisé d'une part à au moins un arceau en forme de portion annulaire, et d'autre part au caisson central.

Par ailleurs, la pluralité d'arceaux peut aussi comporter deux arceaux de maintien des arceaux latéraux de reprise des efforts de poussée, ces deux arceaux de maintien étant disposés respectivement de part et d'autre du caisson central et chacun solidarisé d'une part à l'un des deux arceaux latéraux, et d'autre part au caisson central. De manière avantageuse, les arceaux de maintien sont disposés de façon à travailler en traction, et permettent d'éviter le fléchissement des arceaux latéraux de reprise des efforts de poussée.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, selon un mode de réalisation préféré de la présente invention ;
- la figure 2 représente une vue schématique en perspective de l'ensemble représenté sur la figure 1, le mât d'accrochage ayant été retiré pour laisser plus clairement apparaître les attaches moteur ;
- la figure 3 représente une vue agrandie en perspective du mât d'accrochage de l'ensemble moteur de la figure 1 ;
- les figures 4a et 4b représentent respectivement des vues en coupe prises selon des plans transversaux P1 et P2 de la figure 3 ;
- la figure 4c représente une vue en perspective destinée à expliquer la forme de la pluralité d'arceaux prévue pour constituer partiellement le mât d'accrochage de la figure 3 ;
- la figure 5 représente une vue similaire à celle montrée sur la figure 3, à laquelle il a été rajouté une représentation schématique des attaches moteur fixées au mât d'accrochage ;
- la figure 6 représente une vue similaire à celle montrée sur la figure 3, sur laquelle le mât d'accrochage se présente sous la forme d'une première alternative ;
- la figure 7 représente une vue similaire à celle montrée sur la figure 3, sur laquelle le mât d'accrochage se présente sous la forme d'une seconde alternative ;
- les figures 8a à 8c représentent des vues de côté illustrant différentes étapes successives de l'opération d'assemblage du turboréacteur sur le mât d'accrochage représenté sur la figure 7 ; et
- la figure 9 représente une vue partielle de côté d'un ensemble moteur pour aéronef, selon un autre mode de réalisation préféré de la présente invention.

### EXPOSÉ DÉTAILLÉ DE MODES DE RÉALISATION PRÉFÉRÉS

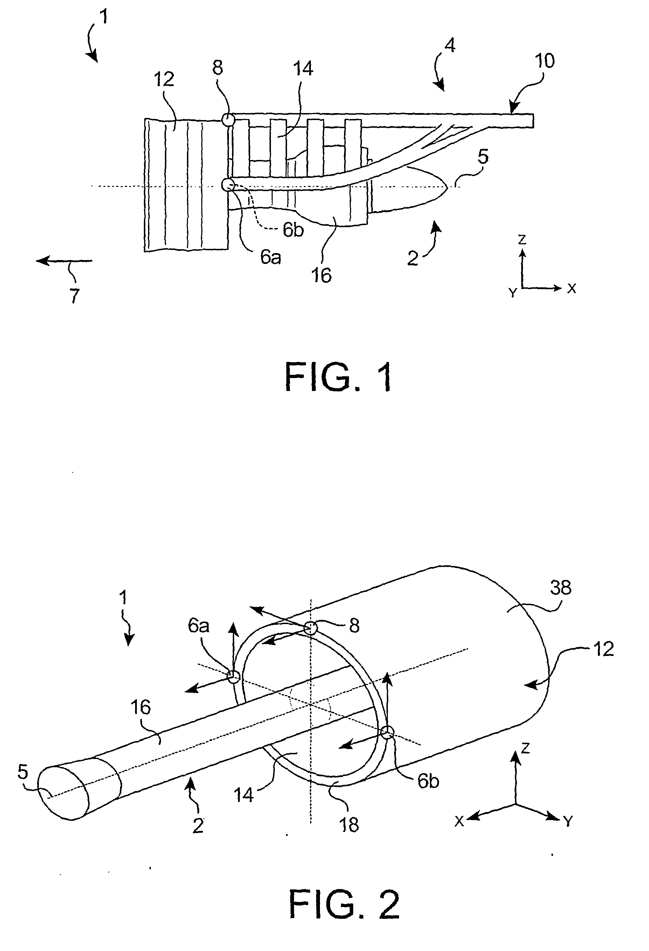

En référence à la figure 1, on voit un ensemble moteur 1 pour aéronef selon un mode de réalisation préféré de la présente invention, cet ensemble 1 étant destiné à être fixé sous une aile d'aéronef (non représenté).

Globalement, l'ensemble moteur 1 comporte un turboréacteur 2, un mât d'accrochage 4, ainsi qu'une pluralité d'attaches moteur 6a, 6b, 8 assurant la fixation du turboréacteur 2 sous ce mât 4 (l'attache 6b étant masquée par l'attache 6a sur cette figure 1). A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction parallèle à un axe longitudinal 5 du turboréacteur 2, Y la direction orientée transversalement par rapport à ce même turboréacteur 2, et Z la direction verticale ou de la hauteur, ces trois directions étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seule une structure rigide 10 du mât d'accrochage 4 a été représentée. Les autres éléments constitutifs non représentés de ce mât 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Les carters 12 et 16 sont bien entendu solidaires l'un de l'autre.

Comme on peut l'apercevoir sur la figure 1, la particularité de l'invention réside dans le fait que les attaches moteur 6a, 6b, 8, de préférence prévues au nombre de trois, sont toutes fixées sur le carter de soufflante 12 susmentionné.

En effet, en référence à présent à la figure 2, on peut voir que la première attache 6a et la seconde attache 6b représentées schématiquement sont disposées de façon symétrique par rapport à un premier plan (non représenté) défini par l'axe longitudinal 5 et la direction Z.

Plus précisément, les attaches 6a, 6b sont toutes les deux fixées sur une partie annulaire périphérique 18 du carter de soufflante 12, et de préférence sur l'arrière de cette partie 18, comme cela est représenté schématiquement.

On peut alors prévoir que les première et seconde attaches moteur 6a, 6b sont diamétralement opposées sur la partie annulaire périphérique 18 présentant une surface externe cylindrique 38 du carter de soufflante 12, de sorte que ces attaches 6a, 6b sont donc chacune traversées par un second plan défini par l'axe longitudinal 5 et la direction Y.

Comme cela est montré schématiquement par les flèches de la figure 2, chacune des première et seconde attaches moteur 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir que la troisième attache moteur 8 représentée schématiquement est aussi fixée sur la partie annulaire périphérique 18 du carter de soufflante 12, également de préférence sur l'arrière de cette partie 18.

A titre indicatif, il est précisé que les attaches 6a, 6b, 8 sont fixées sur la partie annulaire périphérique 18 du carter 12 par l'intermédiaire de parties structurales (non représentées) du moteur, qui sont effectivement de préférence agencées sur l'arrière de la partie annulaire périphérique 18. Néanmoins, il est également possible de rencontrer des moteurs dont les parties structurales sont situées plus vers l'avant sur la partie annulaire périphérique 18, impliquant que les attaches 6a, 6b, 8 sont elles aussi fixées plus vers l'avant du moteur, toujours sur la partie annulaire périphérique 18 du carter de soufflante 12.

En ce qui concerne la troisième attache 8, celle-ci se situe sur la partie la plus haute du carter de soufflante 12, donc sur la partie la plus haute de la partie annulaire périphérique 18, et est par conséquent traversée fictivement par le premier plan indiqué ci-dessus.

Comme cela est montré schématiquement par les flèches de la figure 2, la troisième attache moteur 8 est conçue de manière à pouvoir reprendre des efforts générés par le turboréacteur 2 selon la direction X et selon la direction Y, mais pas ceux s'exerçant selon la direction Z.

De cette manière, cette troisième attache 8 assure conjointement avec les deux attaches 6a, 6b la reprise du moment s'exerçant selon la direction Y.

Il est noté que si les attaches moteur 6a, 6b, 8 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures.

Comme cela a été évoqué précédemment, l'avantage principal associé à la configuration qui vient d'être décrite réside dans le fait que la totale liberté du carter central 16 vis-à-vis des attaches moteur 6a, 6b, 8 entraîne une diminution considérable de la flexion de ce carter durant les diverses situations de vol de l'aéronef, et provoque donc une baisse significative de l'usure par frottement des pales de compresseur et de turbine contre ce carter central 16.

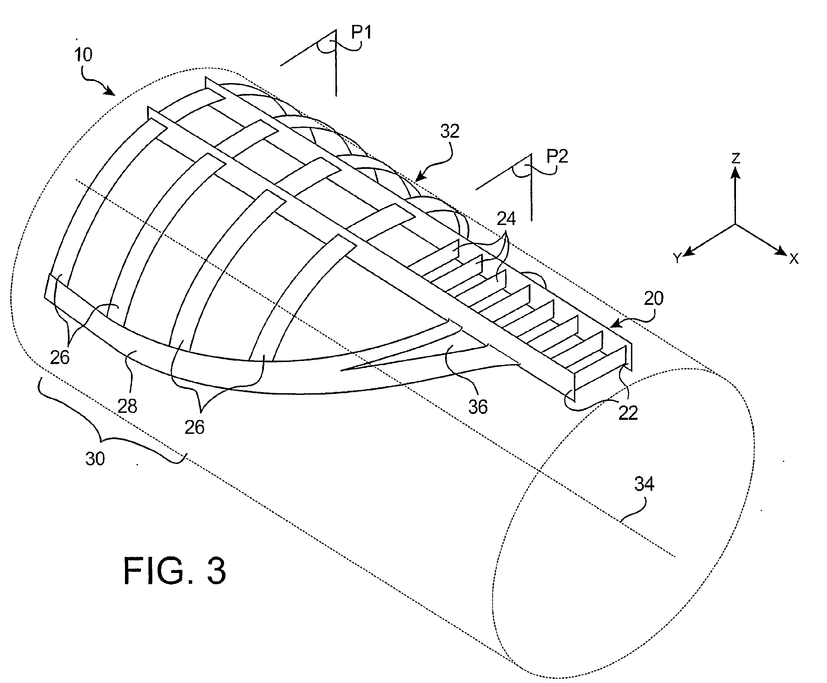

En référence à présent à la figure 3, on voit de façon détaillée le mât d'accrochage 4 de l'ensemble moteur 1, et plus précisément sa structure rigide 10.

Tout d'abord, il est indiqué que cette structure rigide 10 est conçue de manière à présenter une symétrie par rapport au premier plan indiqué ci-dessus, c'est-à-dire par rapport au plan vertical défini par l'axe longitudinal 5 du turboréacteur 2, et la direction Z.

Cette structure rigide 10 comporte un caisson central de torsion 20, qui s'étend d'un bout à l'autre de la structure 10 dans la direction X, parallèlement à cette même direction. A titre indicatif, ce caisson 20 peut être formé par l'assemblage de deux longerons latéraux 22 s'étendant selon la direction X dans des plans XZ parallèles, et raccordés entre eux par l'intermédiaire de nervures transversales 24 qui sont quant à elles orientées dans des plans YZ parallèles.

Une pluralité d'arceaux 30 est prévue pour venir compléter la structure rigide 10 dont le caisson central 20 se situe au niveau d'une portion supérieure de cette même structure 10, chacun des arceaux étant solidaire du caisson central de torsion 20 et faisant saillie de part et d'autre de celui-ci selon la direction Y.

La particularité de cette pluralité d'arceaux 30 est qu'elle délimite une partie d'une surface fictive 32 sensiblement cylindrique de section circulaire, et d'axe longitudinal 34 parallèle au caisson central 20, comme cela est représenté sur la figure 3. En d'autres termes, les arceaux 26, 28 constituant la pluralité d'arceaux 30 disposent chacun d'une courbure adaptée pour pouvoir se positionner autour et au contact de cette surface fictive 32, sur toute leur longueur. Ainsi, d'une manière générale, la pluralité d'arceaux 30 forme une portion d'une enveloppe/cage sensiblement cylindrique de section circulaire, susceptible d'être positionnée autour et à distance du carter central 16 du turboréacteur 2.

Parmi la pluralité d'arceaux 30, on note tout d'abord la présence de plusieurs arceaux en forme de portion annulaire 26 qui sont sensiblement centrés sur l'axe longitudinal 34 de la surface fictive 32, ce dernier étant de préférence confondu avec l'axe longitudinal 5 du turbopropulseur 2.

Ces arceaux 26 sont donc espacés les uns des autres selon la direction X, et agencés dans des plans YZ parallèles. De plus, ils sont solidarisés au caisson central 20 qui traverse chacun d'entre eux en son milieu. Plus précisément, chaque arceau en forme de portion annulaire 26 traverse les deux longerons latéraux 22, et est fixé rigidement sur ces deux derniers, par exemple par soudage ou par assemblage mécanique.

A titre indicatif, ces arceaux 26 peuvent chacun être réalisés d'un seul tenant, ou bien par exemple à l'aide de deux parties identiques rapportées rigidement l'une sur l'autre.

Dans le mode de réalisation représenté sur la figure 3, les arceaux 26 sont au nombre de quatre, et disposent d'une longueur qui diminue au fur et à mesure qu'ils se rapprochent de l'arrière de la structure 10. En effet, il est noté que l'arceau 26 situé le plus à l'avant de la structure 10 et solidaire d'une extrémité avant du caisson central 20, présente la forme d'un demi-anneau dont les deux extrémités sont par conséquent agencées sensiblement au niveau du plan XY passant par l'axe longitudinal 34, ce plan étant identique au second plan susmentionné. Le second arceau 26 présente quant à lui une longueur légèrement inférieure à celle d'un demi-anneau, et ainsi de suite jusqu'au dernier arceau 26 situé par exemple au niveau d'une portion centrale du caisson 20, considérée selon la direction X.

Il est noté que la partie avant du caisson central 20 traversée par les arceaux en forme de portion annulaire 26 ne nécessite pas forcement d'intégrer des nervures transversales 24, puisque les deux longerons latéraux 22 sont raccordés entre eux par la partie supérieure de ces arceaux 26.

La pluralité d'arceaux 30 comporte également deux arceaux latéraux de reprise des efforts de poussée 28 (un seul étant visible sur la figure 3, en raison de la représentation en perspective). Ces arceaux 28 sont effectivement agencés de manière à pouvoir reprendre les efforts de poussée générés par le turboréacteur 2 durant les différentes phases de vol de l'aéronef, dans le but évident de limiter la flexion longitudinale de ce turboréacteur 2, et plus précisément celle de son carter de soufflante 12.

Un arceau 28 est disposé de chaque côté du caisson central 20, et présente une partie avant raccordée rigidement aux arceaux 26, ainsi qu'une partie arrière raccordée rigidement sur le caisson central 20. De manière plus précise, chacun des deux arceaux 28 présente une extrémité avant solidaire de l'une des deux extrémités de l'arceau 26 le plus avant, et s'étend vers l'arrière et vers le haut en étant raccordé rigidement à l'une des deux extrémités de chacun des autres arceaux 26. Ensuite, son extrémité arrière vient s'assembler sur le longeron latéral 22 situé du même côté que l'arceau 28 concerné, au niveau d'une partie arrière du caisson 20. Il est à observer qu'un renfort 36 pourrait éventuellement être adjoint pour renforcer la liaison mécanique établie entre l'extrémité arrière de l'arceau 28 et le longeron latéral 22 associé, cette liaison étant par exemple obtenue par soudage ou par assemblage mécanique.

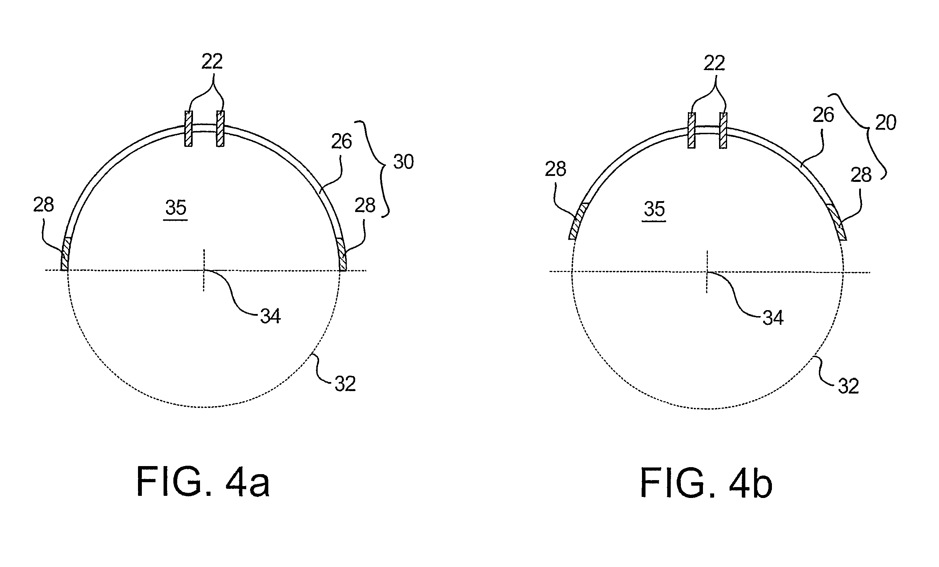

La figure 4a représente une vue en coupe prise selon un plan P1 transversal situé entre les deux arceaux 26 les plus avant, et la figure 4b représente une vue en coupe prise selon un plan P2 également transversal situé à l'arrière de l'arceau 26 le plus arrière, mais à l'avant de la jonction entre l'arceau 28 et le caisson central 20.

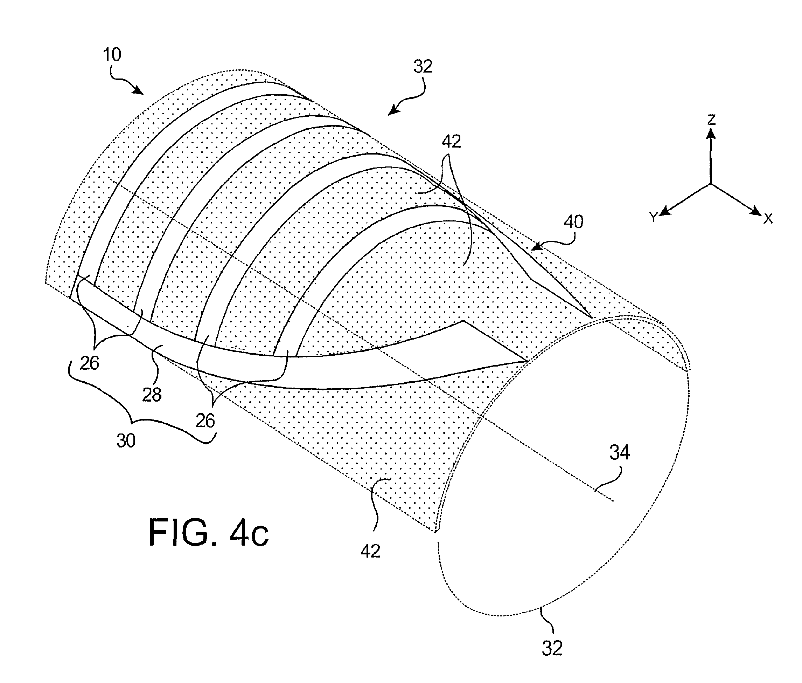

Sur ces figures, on peut effectivement voir que la pluralité d'arceaux 30 délimite une partie de la surface fictive 32 sensiblement cylindrique de section circulaire, et que cette pluralité d'arceaux 30 constitue bien une portion d'une enveloppe/cage sensiblement cylindrique de section semi-circulaire centrée sur l'axe longitudinal 34, comme cela sera également décrit en référence à la figure 4c.

Il est noté que pour créer le moins de perturbation possible du flux secondaire s'échappant du canal annulaire de soufflante 14, le diamètre de la surface fictive cylindrique 32 est de préférence sensiblement identique au diamètre de la surface externe cylindrique 38 de la partie annulaire 18 du carter de soufflante 12. D'autre part, comme on peut le voir sur les figures 4a et 4b, les longerons latéraux 22 ne font saillie que sur une très petite distance à l'intérieur de l'espace 35 délimité par la surface fictive 32, de sorte qu'ils ne perturbent pas non plus significativement l'écoulement du flux d'air secondaire. Cela s'explique notamment par le fait que les longerons 22 disposent d'une hauteur selon la direction Z qui est extrêmement petite par rapport au diamètre des surfaces fictive 32 et externe 38. De plus, ce n'est qu'une partie inférieure de ces longerons 22 qui pénètre à l'intérieur de l'espace 35, l'autre partie se situant au-dessus de la pluralité d'arceaux 30.

Pour illustrer de façon schématique la forme préférée de la pluralité d'arceaux 30, la figure 4c montre que celle-ci constitue une partie seulement d'une enveloppe/cage 40 sensiblement cylindrique de section semi-circulaire, centrée sur l'axe longitudinal 34 et entourant la moitié supérieure de la surface fictive 32. Ainsi, sur cette figure 4c, les parties 42 représentées de façon hachurée correspondent aux parties manquant à la pluralité d'arceaux 30 pour former le demi-cylindre complet 40. En outre, cette représentation permet également de comprendre le fait que la pluralité d'arceaux 30 forme sensiblement un prolongement vers l'arrière de la partie annulaire périphérique 18 du carter de soufflante 12.

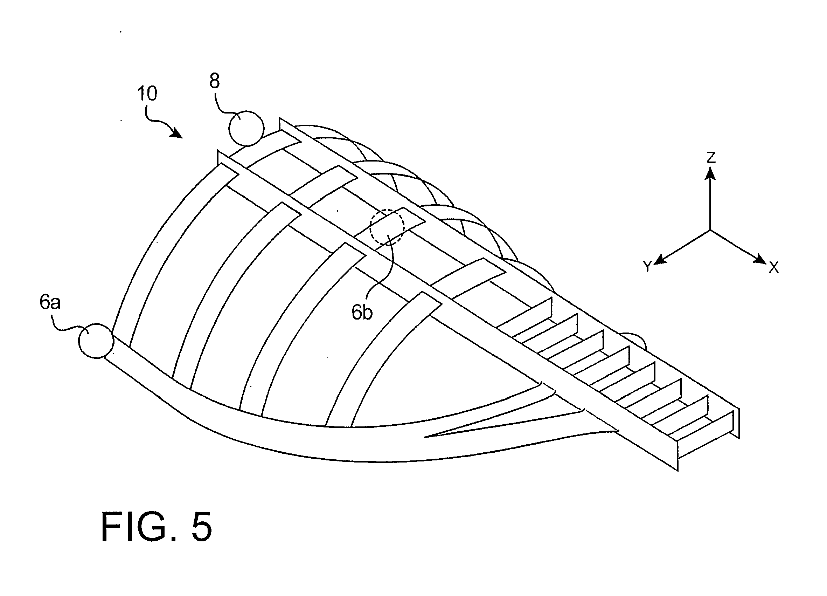

En référence à la figure 5, on voit que la structure rigide 10 du mât d'accrochage 4 est tout à fait adaptée pour supporter les attaches moteur 6a, 6b, 8, puisque celles-ci peuvent être facilement fixées sur l'arceau 26 le plus avant. En effet, les première et seconde attaches 6a, 6b sont respectivement fixées aux deux extrémités de cet arceau 26 le plus avant en forme de demi-anneau, tandis que la troisième attache 8 est solidaire de la partie supérieure de ce même arceau 26, située entre les deux longerons latéraux 22 du caisson central 20. De plus, dans le cas retenu où le caisson central 20 dispose d'un longeron horizontal supérieur et d'un longeron horizontal inférieur (non représentés pour des raisons de clarté) fermant ce caisson 20 respectivement vers le haut et vers le bas, la troisième attache 8 est alors également située entre ces deux longerons horizontaux du caisson central 20.

A titre d'exemple indicatif, la totalité des éléments constitutifs de la structure rigide 10 qui vient d'être décrite peut être réalisée à l'aide de matériaux métalliques, tels que l'acier, l'aluminium, le titane, ou encore à l'aide de matériaux composites, de préférence en carbone. De plus, les arceaux de la pluralité d'arceaux 30 peuvent chacun prendre la forme d'une bande de tôle à courbure.

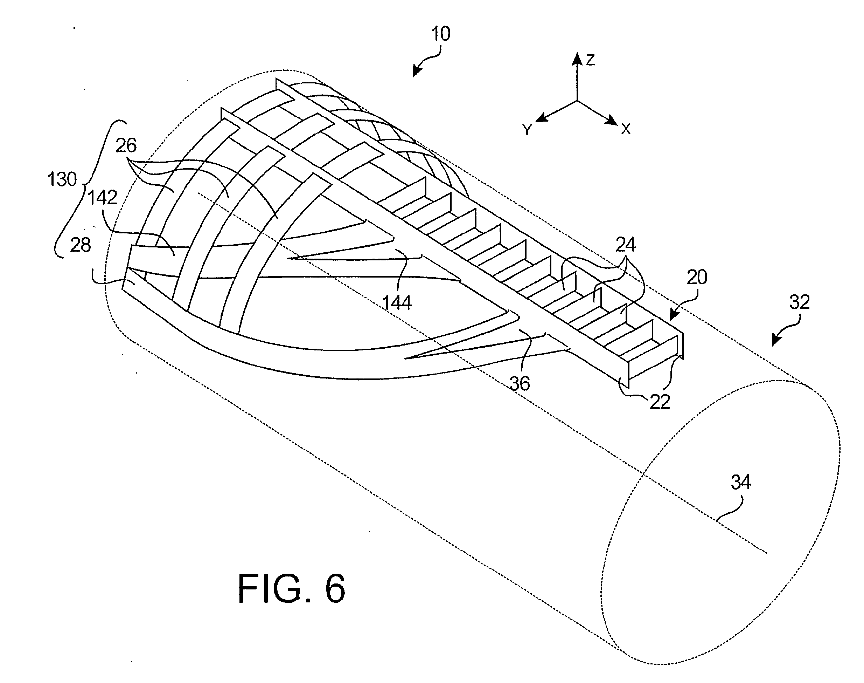

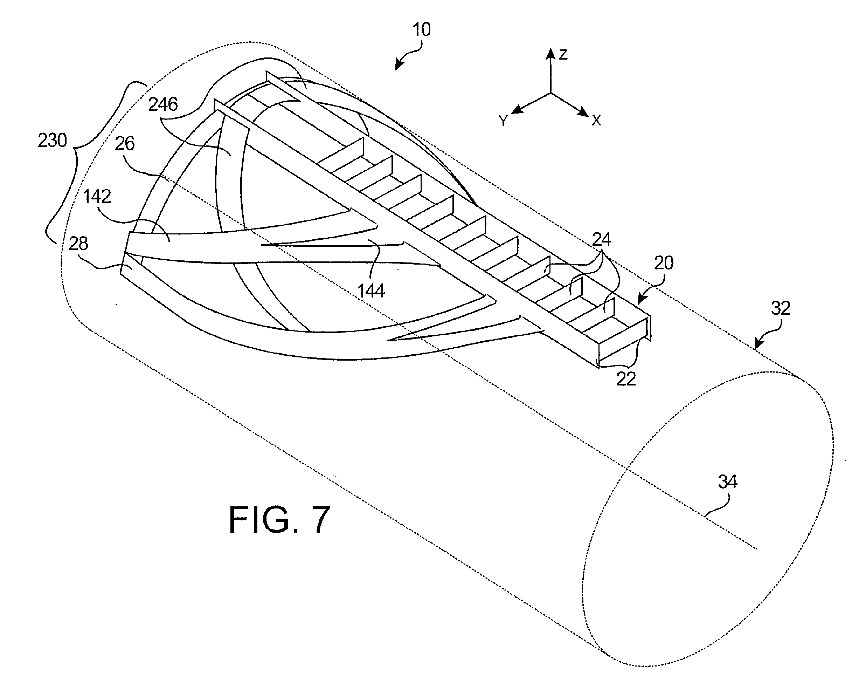

Les figures 6 et 7 représentent respectivement des première et seconde alternatives de réalisation de la structure rigide 10 décrite ci-dessus en référence à la figure 3. Ainsi, sur l'ensemble des figures, les éléments portant les mêmes références numériques correspondent à des éléments identiques ou similaires.

Tout d'abord en référence à la figure 6 représentant la première alternative, il est noté que si la pluralité d'arceaux 130 a été modifiée par rapport à la pluralité d'arceaux 30 décrite précédemment, celle-ci est toujours réalisée de manière à délimiter une partie de la surface fictive 32 sensiblement cylindrique de section circulaire, et à constituer de préférence une partie d'une enveloppe/cage sensiblement cylindrique de section semi-circulaire, centrée sur l'axe longitudinal 34.

Les modifications apportées par rapport à la pluralité d'arceaux 30 sont au nombre de deux, puisque l'arceau en forme de portion annulaire 26 situé le plus à l'arrière de la structure rigide 10 a été supprimé, et qu'il a en revanche été rajouté deux arceaux latéraux secondaires de reprise des efforts de poussée 142, qui ont pour but de remplir un rôle similaire à celui des arceaux 28.

Un arceau 142 est disposé de chaque côté du caisson central 20, et présente une extrémité avant raccordée rigidement à l'une des deux extrémités de l'arceau 26 le plus avant, la liaison mécanique réalisée se situant par exemple juste au-dessus de la fixation entre ce même arceau avant 26 et l'arceau 28. Par ailleurs, l'arceau latéral secondaire de reprise des efforts de poussée 142 s'étend vers l'arrière et vers le haut jusqu'à ce que son extrémité arrière vienne s'assembler sur le longeron latéral 22 situé du même côté que cet arceau 142, au niveau d'une partie centrale du caisson 20. Ici encore, un renfort 144 pourrait éventuellement être adjoint pour renforcer la liaison mécanique établie entre l'extrémité arrière de l'arceau 142 et le longeron latéral 22 associé, cette liaison étant par exemple obtenue par soudage ou par assemblage mécanique.

De plus, il est noté que l'arceau latéral secondaire de reprise des efforts de poussée 142 peut croiser les deux autres arceaux en forme de portion annulaire 26 sans nécessairement être solidarisé à ces derniers.

En référence à la figure 7 représentant la seconde alternative, il est noté que la pluralité d'arceaux 230 a été modifiée par rapport à la pluralité d'arceaux 130 qui vient d'être décrite, mais que celle-ci est toujours réalisée de manière à délimiter une partie de la surface fictive 32 sensiblement cylindrique de section circulaire, et à constituer de préférence une partie d'une enveloppe/cage sensiblement cylindrique de section semi-circulaire, centrée sur l'axe longitudinal 34.

Les modifications apportées par rapport à la pluralité d'arceaux 130 sont également au nombre de deux, puisque seul l'arceau avant en forme de portion annulaire 26 a été conservé, et qu'il a de plus été rajouté deux arceaux de maintien 246 des arceaux de reprise des efforts de poussée 28.

Un arceau de maintien 246 est disposé de chaque côté du caisson central 20, et présente une extrémité avant raccordée rigidement à une partie avant du caisson 20. En outre, l'arceau de maintien 246 s'étend vers l'arrière et vers le bas jusqu'à ce que son extrémité arrière vienne s'assembler sur l'arceau de reprise des efforts de poussée 28 situé du même côté que cet arceau 246, au niveau d'une partie sensiblement centrale de cet arceau 28.

Avec un tel agencement, les arceaux de maintien 246 travaillant en traction permettent aux arceaux de reprise des efforts de poussée 28 de ne pas fléchir durant les différentes phases de vol de l'aéronef, et évitent donc qu'un écartement significatif se produise entre les deux arceaux 28 et 142 d'un même côté de la structure rigide 10.

Il est à observer que de chaque côté de la structure rigide 10, en vue de côté, les arceaux 142 et 246 forment sensiblement un X. De plus, l'arceau de maintien 246 peut croiser l'arceau latéral secondaire de reprise des efforts de poussée 142 sans nécessairement être solidarisé à celui-ci.

Comme cela est visible sur la figure 7, il est possible de prévoir que les deux extrémités avant des deux arceaux 246 soient solidarisées entre elles, par exemple par soudage ou par assemblage mécanique, entre les deux longerons latéraux 22 auxquels elles sont également respectivement raccordées. Naturellement, il aurait aussi pu être envisagé de remplacer les deux arceaux 246 par un unique arceau de maintien réalisé d'un seul tenant et s'étendant de part et d'autre du caisson central 20, sans sortir du cadre de l'invention.

Enfin, comme on peut clairement l'apercevoir sur les figures 3, 6 et 7, le caisson central 20 des première et seconde alternatives de réalisation du mât 4 peut également subir quelques modifications mineures, par exemple en ce qui concerne la disposition et le nombre des nervures transversales 24.

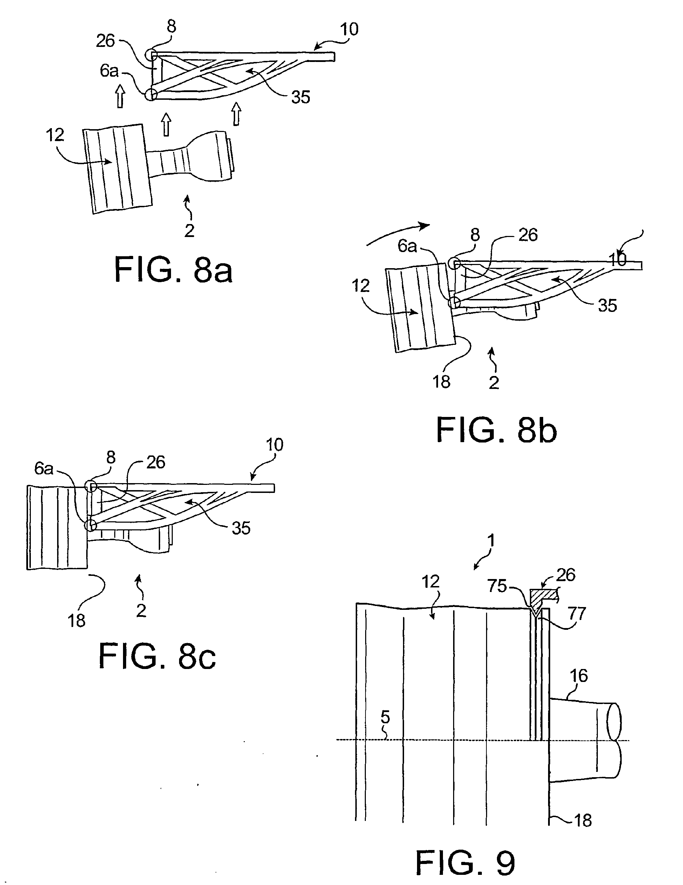

Les figures 8a à 8c représentent des vues illustrant différentes étapes successives de l'opération d'assemblage du turboréacteur 2 sur la structure rigide 10 qui vient d'être décrite, c'est-à-dire celle se présentant sous la forme de la seconde alternative.

Dans un premier temps, comme l'illustrent les flèches de la figure 8a, le turboréacteur 2 se situant dans une position où son avant est légèrement incliné vers le bas subit un déplacement vers le haut, par exemple à l'aide d'un chariot élévateur classique (non représenté), en direction de la structure rigide 10 maintenue fixement.

Lorsque le turboréacteur 2 a été suffisamment surélevé pour pénétrer à l'intérieur de l'espace 35 défini par la surface fictive 32 (non représentée sur cette figure), il est procédé à la mise en place des attaches 6a, 6b, respectivement entre les extrémités de l'arceau avant 26 et la partie annulaire périphérique 18 du carter de soufflante 12.

Ensuite, le turboréacteur 2 est pivoté autour des première et seconde attaches 6a, 6b de sorte que son carter de soufflante 12 puisse remonter, comme cela est représenté schématiquement par la flèche de la figure 8b. La figure 8c montre quant à elle que le pivotement du turboréacteur 2 est stoppé dès lors que la partie annulaire périphérique 18 est suffisamment proche de l'arceau avant 26 pour qu'il puisse être procédé à la mise en place de la troisième attache moteur 8.

En référence à présent à la figure 9, on voit de façon très partielle et simplifiée un ensemble moteur 1 pour aéronef selon un autre mode de réalisation préféré de la présente invention, cet ensemble 1 étant sensiblement identique à celui qui vient d'être décrit.

La particularité de cet autre mode de réalisation préféré réside dans le fait que l'arceau en forme de portion annulaire 26 le plus avant (le reste du mât d'accrochage 4 n'étant pas représenté sur cette figure 9), dispose d'une saillie 75 orientée intérieurement et coopérant avec une rigole 77 pratiquée à l'arrière sur la partie annulaire périphérique 18 du carter de soufflante 12.

La rigole 77, par exemple de section en forme de V (de l'anglais « V-groove »), correspond de préférence à la rigole habituellement pratiquée sur la partie annulaire périphérique 18 pour assurer la fixation d'un dispositif inverseur de poussée. Cette rigole est typiquement demi-sphérique et s'étend globalement sur la partie supérieure du carter 12 entre les positions de l'attache 6a et de l'attache 6b (non représentées).

Ainsi, dans le cas où le moteur n'est pas équipé d'un tel dispositif inverseur de poussée, la saillie 75 de l'arceau 26 le plus avant, qui s'étend de préférence sur toute la longueur de ce dernier et qui présente préférentiellement une section en forme de V, peut alors facilement s'intégrer dans la rigole 77.

De cette manière, la coopération entre la saillie 75 et la rigole 77 permet d'assurer la reprise des efforts s'exerçant selon la direction X, de façon hyperstatique. Par conséquent, les attaches 6a, 6b, 8 n'ont avantageusement plus à assurer la reprise des efforts s'exerçant selon cette direction X.

Il est par ailleurs précisé que dans une telle configuration, lors du montage de l'ensemble moteur, il est d'abord nécessaire de positionner la saillie 75 de l'arceau en forme de portion annulaire 26 dans la rigole 77 présente sur la partie annulaire périphérique 18 du carter de soufflante 12, avant de monter les différentes attaches 6a, 6b, 8.

Bien entendu, diverses modifications peuvent être apportées par l'homme du métier à l'ensemble moteur 1 pour aéronef qui vient d'être décrit, uniquement à titre d'exemple non limitatif. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

## Revendications

1. Ensemble moteur (1) pour aéronef comprenant un turboréacteur (2) comprenant un carter de soufflante (12), un carter central (16) renfermant le coeur du turboréacteur, et disposé vers l'arrière par rapport au carter de soufflante (12) de plus grande dimension que le carter central (16), un mât d'accrochage (4) ainsi qu'une pluralité d'attaches moteur (6a, 6b, 8) interposées entre ledit mât d'accrochage (4) et le turboréacteur (2), l'accrochage du turboréacteur (2) sur le mât (4) étant exclusivement réalisé à l'aide de ladite pluralité d'attaches moteur (6a, 6b, 8), chacune desdites attaches moteur (6a, 6b, 8) étant fixée au carter de soufflante (12) dudit turboréacteur (2).

2. Ensemble (1) pour aéronef selon la revendication 1, **caractérisé en ce que** ladite pluralité d'attaches moteur (6a, 6b, 8) est constituée d'une première attache moteur (6a) et d'une seconde attache moteur (6b) situées de façon symétrique par rapport à un plan défini par un axe longitudinal (5) du turboréacteur (2) et une direction verticale (Z) de celui-ci, ainsi que d'une troisième attache moteur (8) traversée par ce même plan.

3. Ensemble (1) pour aéronef selon la revendication 2, **caractérisé en ce que** les première, seconde et troisième attaches moteur (6a, 6b, 8) sont fixées sur une partie annulaire périphérique (18) du carter de soufflante (12).

4. Ensemble (1) pour aéronef selon la revendication 2 ou la revendication 3, **caractérisé en ce que** les première et seconde attaches moteur (6a, 6b) sont traversées par un plan défini par l'axe longitudinal (5) du turboréacteur (2) et une direction transversale (Y) de celui-ci.

5. Ensemble (1) pour aéronef selon l'une quelconque des revendications 2 à 4, **caractérisé en ce que** les première et seconde attaches moteur (6a, 6b) sont chacune conçues de manière à reprendre des efforts s'exerçant selon une direction longitudinale (X) du turboréacteur (2) et selon la direction verticale (Z) de celui-ci.

6. Ensemble (1) pour aéronef selon l'une quelconque des revendications 2 à 5, **caractérisé en ce que** la troisième attache moteur (8) est conçue de manière à reprendre des efforts s'exerçant selon une direction longitudinale (X) du turboréacteur (2) et selon une direction transversale (Y) de celui-ci.

7. Ensemble (1) pour aéronef selon l'une quelconque des revendications précédentes, **caractérisé en ce que** ledit mât d'accrochage (4) comporte une structure rigide (10) comprenant une pluralité d'arceaux (30, 130, 230) agencés de façon à délimiter conjointement une partie d'une surface fictive (32) sensiblement cylindrique de section circulaire.

8. Ensemble (1) pour aéronef selon la revendication 7, **caractérisé en ce que** ladite pluralité d'arceaux (30, 130, 230) comporte au moins un arceau en forme de portion annulaire (26) sensiblement centré sur un axe longitudinal (34) de ladite surface fictive (32), cet axe longitudinal (34) étant parallèle à une direction longitudinale (X) du turboréacteur (2).

9. Ensemble (1) pour aéronef selon la revendication 8, **caractérisé en ce que** ladite structure rigide (10) du mât d'accrochage (4) comporte un caisson central (20) s'étendant parallèlement à l'axe longitudinal (34) de ladite surface fictive (32) et étant solidaire de chaque arceau en forme de portion annulaire (26).

10. Ensemble (1) pour aéronef selon la revendication 9, **caractérisé en ce que** ladite pluralité d'arceaux (30, 130, 230) comporte en outre deux arceaux latéraux de reprise des efforts de poussée (28) disposés respectivement de part et d'autre du caisson central (20), chacun desdits deux arceaux latéraux (28) étant solidarisé d'une part à chaque arceau en forme de portion annulaire (26), et d'autre part audit caisson central (20).

11. Ensemble (1) pour aéronef selon la revendication 10, **caractérisé en ce que** ladite pluralité d'arceaux (130, 230) comporte en outre deux arceaux latéraux secondaires de reprise des efforts de poussée (142) disposés respectivement de part et d'autre du caisson central (20), chacun desdits deux arceaux latéraux secondaires (142) étant solidarisé d'une part à au moins un arceau en forme de portion annulaire (26), et d'autre part audit caisson central (20).

12. Ensemble (1) pour aéronef selon la revendication 10 ou la revendication 11, **caractérisé en ce que** ladite pluralité d'arceaux (230) comporte également deux arceaux de maintien (246) des arceaux latéraux de reprise des efforts de poussée (28), lesdits deux arceaux de maintien (246) étant disposés respectivement de part et d'autre du caisson central (20) et chacun solidarisé d'une part à l'un desdits deux arceaux latéraux (26), et d'autre part audit caisson central (20).

13. Ensemble (1) pour aéronef selon l'une quelconque des revendications 10 à 12, **caractérisé en ce que** chacun des deux arceaux latéraux de reprise des efforts de poussée (28) est solidarisé à une extrémité de chaque arceau en forme de portion annulaire (26).

14. Ensemble (1) pour aéronef selon l'une quelconque des revendications 8 à 13, **caractérisé en ce qu'**au moins un arceau en forme de portion annulaire (26) est un demi-anneau.

15. Ensemble (1) pour aéronef selon l'une quelconque des revendications 7 à 14, **caractérisé en ce qu'**un diamètre de ladite surface fictive (32) est sensiblement identique à un diamètre d'une surface externe cylindrique (38) dudit carter de soufflante (12) du turboréacteur (2).

16. Ensemble (1) pour aéronef selon l'une quelconque des revendications 7 à 15, **caractérisé en ce que** ladite pluralité d'arceaux (30, 130, 230) prend la forme d'une portion d'une enveloppe (40) sensiblement cylindrique de section semi-circulaire.

17. Aéronef **caractérisé en ce qu'**il comprend au moins un ensemble moteur (1) selon l'une quelconque des revendications précédentes.

## Claims

1. Engine assembly (1) for aircraft comprising a turbojet (2), comprising a fan casing (12), a central casing (16) housing the core of the turbojet, and arranged aft from the fan casing (12) which is larger than the central casing (16), a suspension pylon (4) and a plurality of engine mounts (6a, 6b, 8) inserted between said suspension pylon (4) and the turbojet (2), the turbojet (2) on the pylon (4) being exclusively suspended using said plurality of engine mounts (6a, 6b, 8), each of said engine mounts (6a, 6b, 8) being attached to the fan casing (12) of said turbojet (2).

2. Assembly (1) for aircraft according to claim 1, **characterised in that** said plurality of engine mounts (6a, 6b, 8) consists of a first engine mount (6a) and a second engine mount (6b) located in a symmetrical manner in relation to a plane defined by a longitudinal axis (5) of the turbojet (2) and a vertical direction (Z) of said turbojet, as well as a third engine mount (8) through which this plane passes.

3. Assembly (1) for aircraft according to claim 2, **characterised in that** the first, second and third engine mounts (6a, 6b, 8) are attached to a peripheral annular part (18) of the fan casing (12).

4. Assembly (1) for aircraft according to claim 2 or claim 3, **characterised in that** a plane defined by the longitudinal axis (5) of the turbojet (2) and a transversal direction (Y) of said turbojet passes through the first and second engine mounts (6a, 6b).

5. Assembly (1) for aircraft according to any of claims 2 to 4, **characterised in that** the first and second engine mounts (6a, 6b) are each designed in such a way as to resist forces exerted along a longitudinal direction (X) of the turbojet (2) and along the vertical direction (Z) of said turbojet.

6. Assembly (1) for aircraft according to any of claims 2 to 5, **characterised in that** the third engine mount (8) is designed in such a way as to resist the forces exerted along a longitudinal direction (X) of the turbojet (2) and along a transverse direction (Y) of said turbojet.

7. Assembly (1) for aircraft according to any one of the previous claims, **characterised in that** said suspension pylon (4) comprises a rigid structure (10) comprising a plurality of cradles (30, 130, 230) arranged in such a way as to delimit jointly a part of a substantially cylindrical imaginary surface (32) with a circular section.

8. Assembly (1) for aircraft according to claim 7, **characterised in that** said plurality of cradles (30, 130, 230) comprises at least one cradle (26) forming a portion of an annulus substantially centred on a longitudinal axis (34) of said imaginary surface (32), said longitudinal axis (34) being parallel to a longitudinal direction (X) of the turbojet (2).

9. Assembly (1) for aircraft according to claim 8, **characterised in that** said rigid structure (10) of the suspension pylon (4) comprises a central box (20) extending parallel to the longitudinal axis (34) of said imaginary surface (32) and being fixed to each cradle (26) forming a portion of an annulus.

10. Assembly (1) for aircraft according to claim 9, **characterised in that** said plurality of cradles (30, 130, 230) also comprises two lateral cradles for resisting thrust forces (28) arranged on either side of the central box (20), each of said two lateral cradles (28) being fixed firstly to each cradle (26) forming a portion of an annulus and, secondly to said central box (20).

11. Assembly (1) for aircraft according to claim 10, **characterised in that** said plurality of cradles (130, 230) also comprises two secondary lateral cradles for resisting thrust forces (142) arranged on either side of the central box (20), each of said two secondary lateral cradles (142) being fixed firstly to at least one cradle (26) forming a portion of an annulus and secondly to said central box (20).

12. Assembly (1) for aircraft according to claim 10 or claim 11, **characterised in that** said plurality of cradles (230) also comprises two cradles (246) supporting the lateral cradles that resist thrust forces (28), said two supporting cradles (246) being arranged on either side of the central box (20) and each fixed firstly to one of said two lateral cradles (26) and secondly to said central box (20).

13. Assembly (1) for aircraft according to any of claims 10 to 12, **characterised in that** each of the two lateral cradles for resisting thrust forces (28) is fixed to one end of each cradle (26) forming a portion of an annulus.

14. Assembly (1) for aircraft according to any of claims 8 to 13, **characterised in that** at least one cradle (26) forming a portion of an annulus is a half ring.

15. Assembly (1) for aircraft according to any of claims 7 to 14, **characterised in that** a diameter of said imaginary surface (32) is substantially identical to a diameter of an external cylindrical surface (38) of said fan casing (12) of the turbojet (2).

16. Assembly (1) for aircraft according to any one of claims 7 to 15, **characterised in that** said plurality of cradles (30, 130, 230) has the shape of a portion of a substantially cylindrical envelope (40) with a semi-circular section.

17. Aircraft **characterised in that** it comprises at least one engine assembly (1) according to any of the previous claims.

## Patentansprüche

1. Triebwerksanordnung (1) für ein Flugzeug mit einem Turboluftstrahltriebwerk (2), umfassend ein Verdichtergehäuse (12), ein Zentralgehäuse (16), das die Mitte des Turboluftstrahltriebwerks umschließt und in Bezug auf das Verdichtergehäuse (12), das eine größere Abmessung besitzt als das Zentralgehäuse (16), nach hinten gerichtet angebracht ist, einer Montagestruktur (4) sowie mehreren Triebwerkbefestigungen (6a,6b,8), die zwischen der Montagestruktur (4) und dem Turboluftstrahltriebwerk (2) angebracht sind, wobei die Montage bzw. Aufhängung des Turboluftstrahltriebwerks (2) an der Struktur (4) ausschließlich mit Hilfe der mehreren Triebwerkbefestigungen (6a,6b,8) durchgeführt ist, wobei jede der Triebwerkbefestigungen (6a,6b,8) an dem Verdichtergehäuse (12) des Turboluftstrahltriebwerks (2) befestigt ist.

2. Anordnung (1) für ein Flugzeug nach Anspruch 1, **dadurch gekennzeichnet, dass** die mehreren Triebwerkbefestigungen (6a,6b,8) aus einer ersten Triebwerkbefestigung (6a) und einer zweiten Triebwerkbefestigung (6b), die in Bezug auf eine durch eine Längsachse (5) des Turboluftstrahltriebwerks (2) und eine Vertikalrichtung (Z) desselben festgelegte Ebene symmetrisch positioniert sind, sowie einer dritten Triebwerkbefestigung (8), durch die diese Ebene läuft, bestehen.

3. Anordnung (1) für ein Flugzeug nach Anspruch 2, **dadurch gekennzeichnet, dass** die erste, die zweite und die dritte Triebwerkbefestigung (6a,6b,8) an einem Ringumfangsteil (18) des Verdichtergehäuses (12) befestigt sind.

4. Anordnung (1) für ein Flugzeug nach Anspruch 2 oder Anspruch 3, **dadurch gekennzeichnet, dass** eine durch die Längsachse (5) des Turboluftstrahltriebwerks (2) und eine Querrichtung (Y) zu diesem festgelegte Ebene durch die erste und die zweite Triebwerkbefestigung (6a,6b) verläuft.

5. Anordnung (1) für ein Flugzeug nach einem der Ansprüche 2 bis 4, **dadurch gekennzeichnet, dass** die erste und die zweite Motorbefestigung (6a,6b) jeweils derart gestaltet sind, dass sie in Längsrichtung (X) des Turboluftstrahltriebwerks (2) und der Vertikalrichtung (Z) desselben auftretende Kräfte aufnehmen.

6. Anordnung (1) für ein Flugzeug nach einem der Ansprüche 2 bis 5, **dadurch gekennzeichnet, dass** die dritte Triebwerkbefestigung (8) derart gestaltet ist, dass sie in Längsrichtung (X) des Turboluftstrahltriebswerks (2) und einer Querrichtung (Y) desselben auftretende Kräfte aufnimmt.

7. Anordnung (1) für ein Flugzeug nach einem der vorhergehenden Ansprüche, **dadurch gekennzeichnet, dass** die Montagestruktur (4) eine starre Struktur (10) die mehrere Bögen (30,130,230) umfasst, die derart angeordnet sind, dass sie gemeinsam einen Teil einer fiktiven, im wesentlichen zylindrischen Oberfläche von kreisförmigem Querschnitt (32) begrenzen, umfasst.

8. Anordnung (1) für ein Flugzeug nach Anspruch 7, **dadurch gekennzeichnet, dass** die mehreren Bögen (30,130,230) mindestens einen Bogen in der Form eines Ringteils (26) umfassen, der im wesentlichen um eine Längsachse (34) der fiktiven Oberfläche (32) angeordnet ist, wobei die Längsachse (34) parallel zu einer Längsrichtung (X) des Turboluftstrahltriebwerks (2) ist.

9. Anordnung (1) für ein Flugzeug nach Anspruch 8, **dadurch gekennzeichnet, dass** die starre Struktur (10) der Montagestruktur (4) eine Zentralkassette (20) umfasst, die sich parallel zur Längsachse (34) der fiktiven Oberfläche (32) erstreckt und kraftschlüssig mit jedem Bogen in der Form eines Ringteils (26) verbunden ist.

10. Anordnung (1) für ein Flugzeug nach Anspruch 9, **dadurch gekennzeichnet, dass** die mehreren Bögen (30,130,230) ferner zwei Seitenbögen zur Aufnahme von Schubkräften (28) umfassen, die auf beiden Seiten der Zentralkassette (20) angeordnet sind, wobei die zwei Seitenbögen (28) einerseits mit jedem Bogen in der Form eines Ringteils (26) und andererseits mit der Zentralkassette (20) verbunden sind.

11. Anordnung (1) für ein Flugzeug nach Anspruch 10, **dadurch gekennzeichnet, dass** die mehreren Bögen (130,230) ferner zwei Sekundärseitenbögen zur Aufnahme von Schubkräften (142) umfassen, die auf beiden Seiten der Zentralkassette (20) angeordnet sind, wobei die zwei Sekundärseitenbögen (142) einerseits mit mindestens einem Bogen in der Form eines Ringteils (26) und andererseits mit der Zentralkassette (20) verbunden sind.

12. Anordnung (1) für ein Flugzeug nach Anspruch 10 oder Anspruch 11, **dadurch gekennzeichnet, dass** die mehreren Bögen (230) auch zwei Haltebögen (246) der Seitenbögen zur Aufnahme von Schubkräften (28) umfassen, wobei die zwei Haltebögen (246) auf beiden Seiten der Zentralkassette (20) angeordnet sind und jeder einerseits mit einem der zwei Seitenbögen (26) und andererseits mit der Zentralkassette (20) verbunden ist.

13. Anordnung (1) für ein Flugzeug nach einem der Ansprüche 10 bis 12, **dadurch gekennzeichnet, dass** jeder der zwei Seitenbögen zur Aufnahme von Schubkräften (28) mit einem Ende von jedem Bogen in der Form eines Ringteils (26) verbunden ist.

14. Anordnung (1) für ein Flugzeug nach einem der Ansprüche 8 bis 13, **dadurch gekennzeichnet, dass** mindestens ein Bogen in der Form eines Ringteils (26) ein Halbring ist.

15. Anordnung (1) für ein Flugzeug nach einem der Ansprüche 7 bis 14, **dadurch gekennzeichnet, dass** der Durchmesser der fiktiven Oberfläche (32) im wesentlichen identisch mit einem Durchmesser einer zylindrischen äußeren Oberfläche (38) des Verdichtergehäuses (12) des Turboluftstrahltriebwerks (2) ist.

16. Anordnung (1) für ein Flugzeug nach einem der Ansprüche 7 bis 15, **dadurch gekennzeichnet, dass** die mehreren Bögen (30,130,230) die Form eines Teils einer im wesentlichen zylindrischen Hülle (40) mit halbkreisförmigen Querschnitt bilden.

17. Flugzeug, **dadurch gekennzeichnet, dass** es mindestens eine Triebwerksanordnung (1) nach einem der vorhergehenden Ansprüche umfasst.
